# FASCICULE DE BREVET EUROPEEN

(11) **EP 0 945 674 B1**
(45) Date de publication et mention de la délivrance du brevet: **27.06.2007**
(21) Numéro de dépôt: 99430003.6
(22) Date de dépôt: 19.03.1999
(51) Int. Cl.: F21V 8/00

(54) **Dispositif lumineux éclairé par la tranche**
Beleuchtungsanlage mit Kantenbeleuchtung
Luminous edge-lit device

(30) Priorité: 25.03.1998 FR 9803933
(43) Date de publication de la demande: 29.09.1999
(73) Titulaire: Blanc, Christophe, 84120 Pertuis (FR); Chazallet, Frédéric, 13013 Marseille (FR)
(72) Inventeur: Blanc, Christophe, 84120 Pertuis (FR); Chazallet, Frédéric, 13013 Marseille (FR)
(74) Mandataire: Domange, Maxime

(56) Documents cités:
- EP-A- 0 495 273
- EP-A- 0 800 036
- WO-A-96/17207
- WO-A-96/36892

## Description

La présente invention a pour objet un dispositif lumineux éclairé par la tranche.

Le secteur technique de l'invention est le domaine de la fabrication de dispositifs d'affichage lumineux.

Il est connu de construire des dispositifs d'affichage lumineux tels que des enseignes comportant des signes et/ou des éléments graphiques tels que des images, qui comportent un support ou substrat mince tel qu'une feuille ou un panneau, par exemple plan, d'un matériau translucide ou transparent, qui est éclairé, par la tranche du support, par une source lumineuse telle qu'un tube fluorescent ; une des faces principales du support peut comporter des zones, dont la forme correspond à des signes (chiffres ou lettres notamment), qui sont dépolies par sablage ou gravées pour apparaître en surbrillance par rapport au reste de la face principale du support.

Le problème rencontré dans ce type de dispositif est celui de l'hétérogénéité de l'éclairage : les zones éloignées de la source de lumière sont assombries ; il est en outre fréquent de constater la présence d'ombres portées des zones dépolies dans d'autres zones du support.

Le brevet N° EP 549 679 décrit une enseigne comprenant une feuille de transmission de la lumière qui est éclairée du bord et ayant deux faces opposées sur chacune desquelles des points sont appliqués ; selon ce document, en vue d'obtenir un éclairage régulier de l'enseigne, les points sont gravés, peints ou sérigraphiés, et forment une matrice recouvrant de façon substantielle les deux surfaces principales de la feuille ; il a cependant été constaté que cette technique n'apporte pas entière satisfaction.

Le document WO 96/17207 décrit lui aussi un panneau lumineux illuminé par la tranche au moyen d'une source lumineuse. La source lumineuse comporte un guide lumineux muni de facettes inclinées formées directement dans le matériau du guide lumineux et dont l'inclinaison et l'écartement peuvent être variés sur la longueur du guide pour obtenir une distribution de lumière uniforme sur le panneau lumineux.

La présente invention a pour objectif de proposer un dispositif lumineux à éclairage par la tranche, qui soit amélioré, ainsi qu'un procédé de fabrication d'un tel dispositif.

La solution au problème posé consiste à prévoir, sur au moins une des deux faces principales opposées du support de transmission de la lumière (tel qu'une feuille ou une plaque en matière plastique translucide ou transparente), un réseau de motifs diffusants linéaires, c'est-à-dire de forme allongée selon une ligne droite ou courbe, dont l'espacement varie régulièrement selon une progression géométrique.

Selon un autre aspect, l'invention consiste à proposer un guide de lumière pour un dispositif d'éclairage, qui comporte (est constitué par) une plaque (plane ou cintrée) transparente en verre ou matière plastique, ayant deux faces principales opposées et une tranche, au moins une des faces principales comportant un réseau de motifs diffusants linéaires (pour l'émission par cette face principale de la lumière conduite par la plaque) ; l'espacement des motifs diffusants linéaires varie régulièrement le long d'un axe selon une progression géométrique dont la raison est située dans une plage allant de 0,99 à 1,01, et différente de 1.

Le caractère diffusant des motifs résulte de la déformation locale de la face externe du support, en relief ou de préférence en creux ; du fait que cette déformation s'étend de manière homogène et identique tout le long du motif linéaire, on provoque une diffusion et/ou une extraction de la lumière circulant dans le support, qui est homogène tout au long du motif linéaire ; du fait que les motifs linéaires sont espacés selon une distance régulièrement variable (c'est-à-dire régulièrement croissante ou décroissante) le long d'un axe passant par la source lumineuse et/ou perpendiculaire à la tranche du support, on obtient une diffusion homogène dans toute la zone du support contenant les motifs diffusants linéaires..

Selon un mode préféré de réalisation, les motifs diffusants linéaires sont constitués de segments, le cas échéant curvilignes mais de préférence rectilignes, qui sont gravés et/ou formés en creux, c'est-à-dire constituent des rainures ; la largeur des différents motifs linéaires ou rainures est de préférence identique, et l'espacement entre les motifs linéaires varie selon une progression géométrique dont la raison est de l'ordre de 0,99 à 1,01, de préférence de l'ordre de 0,999 à 1,001, en particulier de l'ordre de 0,9999 à 1,0001, et différente de 1.

L'espacement des motifs augmente lorsqu'on se rapproche de la tranche par laquelle la lumière est injectée dans le support ; l'invention permet d'obtenir une brillance sensiblement constante sur toute la zone du substrat qui est munie des motifs diffusants linéaires ; cette zone peut constituer et/ou s'étendre sur une partie substantielle de la face principale, par exemple sur la totalité d'au moins une des faces principales opposées, afin que la luminosité soit homogène sur toute la face ; dans ce cas, en vue de la réalisation d'une enseigne, les signes à afficher sont inscrits, soit sur la face du support comportant les motifs diffusants linéaires, soit sur un support distinct tel qu'une feuille de papier, qui est plaqué contre la face du support lumineux muni des motifs diffusants linéaires ; alternativement, les motifs linéaires sont régulièrement disposés dans une zone dont le contour (externe et/ou interne) correspond à la forme d'un signe ou dessin à afficher ; dans ce cas, les extrémités des segments des motifs diffusants linéaires sont situés sur ce contour formant l'enveloppe du signe.

Dans le cas où le support est éclairé par une seule tranche, l'espacement des motifs varie de façon monotone, de façon décroissante lorsqu'on s'éloigne de cette tranche ; dans le cas où le support est éclairé par deux tranches opposées du support, l'espacement des motifs diffusants varie de façon non monotone : de façon décroissante depuis une première tranche jusqu'à une zone centrale du support, puis de façon croissante de ladite zone centrale jusqu'à une deuxième tranche d'éclairement, qui est opposée à ladite première tranche.

Selon d'autres caractéristiques préférées de l'invention :
- la largeur de chaque rainure ou motif diffusant linéaire est de l'ordre de 1 à 100 microns, de préférence de l'ordre de 10 à 80 microns, par exemple voisine de 20 à 50 microns ;
- la distance minimale entre les deux rainures les plus rapprochées l'une de l'autre (qui sont donc les plus éloignées de la tranche par laquelle est introduite la lumière) est de l'ordre de 2 à 200 microns, en particulier de l'ordre de 20 à 160 microns, par exemple voisine de 40 à 100 microns ;
- la distance maximale entre les deux rainures les plus éloignées l'une de l'autre (qui sont donc les plus proches de la tranche et/ou de la source de lumière) est inférieure ou égale à 10 millimètres, en particulier inférieure ou égale à 5 millimètres ;
- le nombre de motifs diffusants linéaires est compris entre 100 et 10 000, de préférence compris entre 300 et 3000, par exemple voisin de 600 à 1500 ;
- les motifs diffusants linéaires peuvent être constitués par des rainures interrompues formant des segments rectilignes parallèles de longueur variable, qui sont groupées de manière à ce que l'enveloppe de leurs extrémités forme un dessin ou signe qui apparaît en surbrillance ; alternativement, les rainures sont ininterrompues et les signes sont disposés sur un masque apposé contre le substrat ou support.

Le dispositif d'affichage lumineux comporte de préférence une pluralité de tronçons de fibres optiques plastiques constituant un faisceau acheminant la lumière, de la source de lumière jusqu'au support ; ceci permet de disposer la source lumineuse à distance du support ; ceci permet d'obtenir facilement un dispositif robuste, insensible à l'eau notamment pour un usage à l'extérieur d'un bâtiment, et ne présentant aucun risque de choc électrique avec le public ; ceci facilite également l'introduction par la tranche du support, de faisceaux lumineux de différentes longueur d'onde et donc de différentes couleurs.
- le dispositif comporte un organe distributeur ou déviateur de lumière, qui s'étend le long d'une tranche ou bord du support et qui comporte des moyens réfléchissants, afin de produire un flux lumineux homogène tout le long de la tranche, qui est sensiblement dirigé perpendiculairement à celle-ci, à partir d'un flux lumineux incident dirigé sensiblement parallèlement à la tranche ; ce distributeur peut être intégré au support ; à cet effet, le support peut être muni de rainures réfléchissantes prévues sur ladite tranche, dont les axes longitudinaux sont sensiblement perpendiculaires au plan du support, dont l'espacement peut varier, par exemple régulièrement le long de la tranche, et dont la profondeur est constante ou régulièrement variable ; chaque rainure comporte une face perpendiculaire au plan du support diffusant et orientée d'un angle voisin de 45 degrés par rapport à la tranche d'injection de lumière dans le support, qui joue le rôle d'un miroir ; cette face peut être plane ou légèrement concave pour favoriser la dispersion de la lumière ;

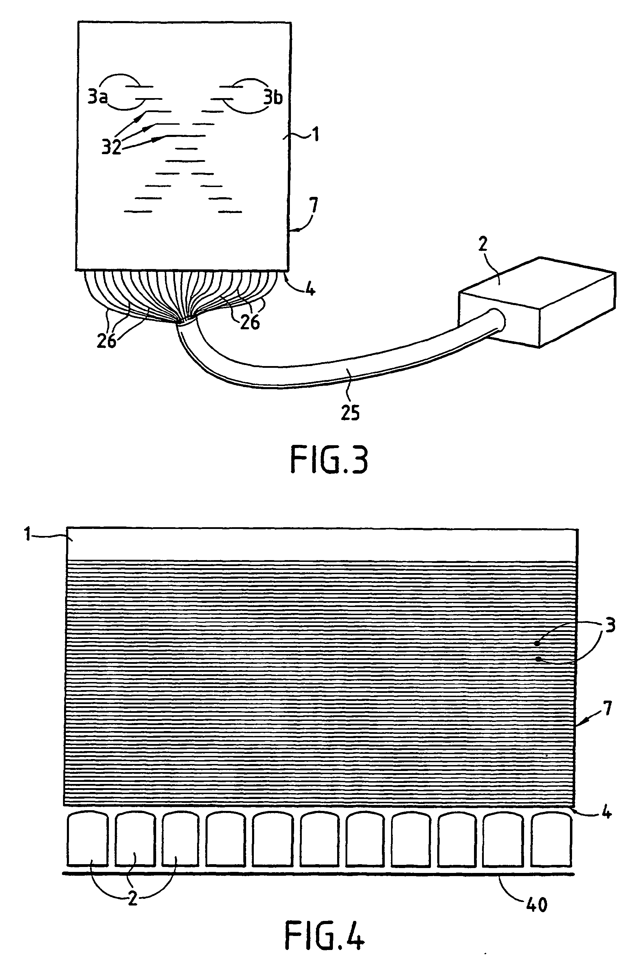

Alternativement, le dispositif peut comporter une pluralité de diodes luminescentes disposées en regard et/ou le long de la tranche ; l'utilisation de LED est intéressante car elles sont alimentées sous une tension faible, ce qui diminue les risques d'accident par contact ; ces diodes sont en outre robustes, fiables et peu coûteuses ; elles sont logées en partie au moins dans le support, ou bien disposées sensiblement au contact d'un de ses bords, comme illustré figure 3 ; le dispositif peut comporter en outre un écran plan mince homogène diffusant.

Selon un autre aspect, l'invention consiste à fabriquer un dispositif lumineux à éclairage par la tranche, par usinage de motifs diffusants linéaires d'espacement régulièrement variable, à l'aide d'un faisceau laser.

A cet effet, le support à usiner peut être monté sur des moyens de déplacement selon deux axes perpendiculaires ; alternativement, la source (ou bien un organe - tel qu'un miroir - de guidage du faisceau émis par la source) laser peut elle-même être montée sur un dispositif de déplacement selon deux axes, les déplacements étant commandés par une unité électronique numérique commandée par logiciel permettant la réalisation des motifs diffusants selon une configuration géométrique prédéterminée ; l'usinage de matériaux plastiques par laser permet de réaliser simplement des rainures diffusantes linéaires rectilignes ou incurvées dont l'espacement varie régulièrement, et qui peuvent être adaptées éventuellement à la configuration des signes ou symboles à afficher, de façon très simple.

A titre d'exemple, on peut utiliser une source laser à vapeur de cuivre ou un laser CO₂ ; on choisit de préférence un laser de longueur d'onde de l'ordre de 1 à 10 microns, en particulier un laser CO₂ de longueur d'onde voisine de 10,6 microns. On peut en outre prévoir un traitement thermique (ou « recuit ») du support pour ajuster le facteur de diffusion des motifs préalablement formés sur le support, et/ou prévoir une déformation mécanique et/ou thermique de la plaque après usinage des motifs diffusants, pour obtenir une plaque cintrée (incurvée).

La matière transparente constitutive de la plaque support est de préférence choisie parmi le verre, le polycarbonate et le polyméthacrylate de méthyle ; cette matière est de préférence choisie de sorte que son coefficient de transmission dans le domaine des radiations visibles est au moins égal à 0,85, en particulier situé dans une plage allant de 0,88 à 0,95, afin d'assurer une bonne transmission de lumière dans la plaque et d'assurer une diffusion homogène de lumière vers l'extérieur de la plaque, par toute la surface de la plaque qui est munie des motifs diffusants.

Il a été constaté que les performances de diffusion de lumière par une plaque selon l'invention sont nettement améliorées, en particulier pour des plaques de grande dimension telles que des plaques rectangulaires de largeur au moins égale à 0,1 mètre, en particulier de largeur au moins égale à 0,25 mètre, et de longueur au moins égale à 0,25 mètre, en particulier de longueur au moins égale à 0,5 mètre ; des essais effectués sur des plaques rectangulaires de surface allant de 0,1 m² à 2 m² et d'épaisseur allant de 1 à 10 millimètres, en particulier de 2 à 7 millimètres, ont permis de constater une diffusion homogène sur toute la surface.

L'utilisation d'un faisceau laser dévié par un organe de guidage mobile sous la commande d'un ordinateur équipé d'un moyen (programme) de calcul de la position et de l'écartement des motifs diffusants (en fonction notamment des dimensions d'une plaque à usiner), permet d'usiner facilement des plaques de dimensions différentes et/ou de caractéristiques de diffusion lumineuse différentes, et permet de réaliser à moindre coût des panneaux à l'unité (à la demande) ; dans ce mode préféré de réalisation, la source laser et la plaque à usiner sont montées fixes sur une table d'une machine.

En outre, l'utilisation d'un faisceau laser déplacé sous la commande d'un ordinateur permet d'obtenir un usinage précis et rapide du réseau de motifs diffusants.

L'invention permet d'obtenir des panneaux lumineux dont l'angle de vue est satisfaisant, par exemple de l'ordre de 60 degrés.

Les avantages procurés par l'invention seront mieux compris au travers de la description suivante qui se réfère aux dessins annexés, qui illustrent sans aucun caractère limitatif des modes préférentiels de réalisation de l'invention.

Dans les dessins, les éléments identiques ou similaires portent, sauf indication contraire, les mêmes références d'une figure à l'autre.

La figure 1 illustre en vue en plan un premier mode de réalisation d'un support mince d'un dispositif lumineux conforme à l'invention.

La figure 2 est une vue selon II/II de la figure 1 et illustre le support mince en vue en coupe transversale partielle.

La figure 3 est une vue schématique en perspective illustrant un deuxième mode de réalisation d'un dispositif selon l'invention.

La figure 4 illustre en vue en plan schématique un troisième mode de réalisation d'un support entrant dans la constitution d'un dispositif selon l'invention, qui est équipé d'une rangée de diodes électroluminescentes montées sur un support repéré 40.

La figure 5 illustre en vue en plan un dispositif de déviation d'un faisceau lumineux pour la production d'un faisceau homogène le long de la tranche d'un support mince.

La figure 6 illustre en vue en coupe longitudinale par un plan perpendiculaire au plan du support, un autre mode de réalisation d'un dispositif lumineux selon l'invention.

La figure 7 illustre en vue en perspective schématique un support 1 dans un mode de réalisation similaire à celui de la figure 1.

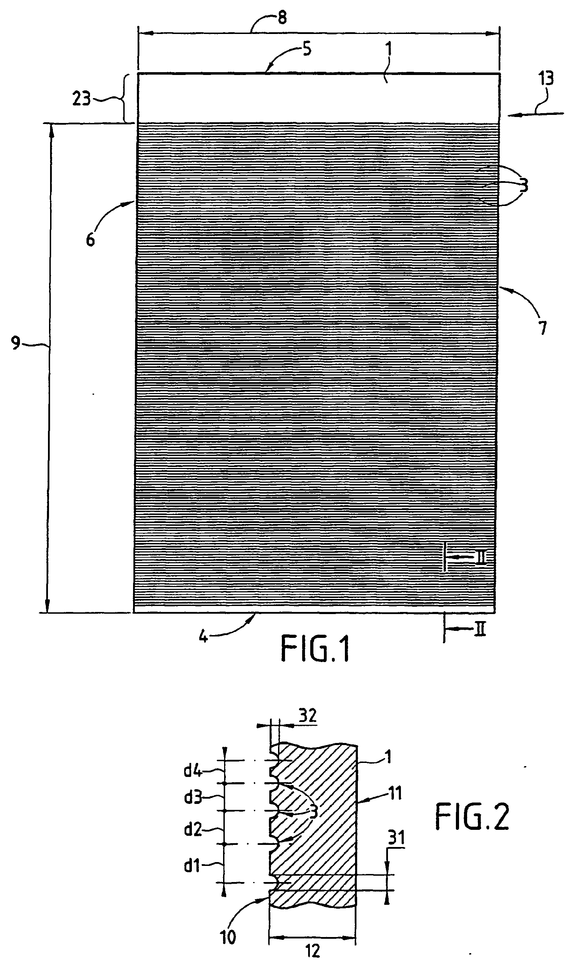

Par référence aux figures 1 à 3 particulièrement, le dispositif lumineux conforme à l'invention comporte une source lumineuse 2 délivrant un flux lumineux transporté par un câble 25 formé d'une pluralité de tronçons 26 de fibres optiques dont les extrémités sont disposées de façon régulière le long de la tranche 4 (figure 3) d'un support 1 tel qu'une feuille ou un panneau mince de matière plastique transparente, en particulier du polycarbonate ou du méthyle méthacrylate.

La source lumineuse 2 peut comporter une ou plusieurs lampes halogènes ou à vapeur métallique faible pression. Ces dernières, en particulier permettent des rendements élevés et des luminances importantes. Le couplage ampoule / faisceau de fibres utilise principalement des réflecteurs et non des systèmes à condenseur. Cela permet un rendement de couplage plus élevé ainsi que la possibilité d'utiliser des réflecteurs dichroïques qui conduisent à l'obtention d'une lumière froide.

La feuille 1 rectangulaire est dotée de deux faces principales opposées 10 et 11 et est délimitée par quatre tranches ou bords 4, 5, 6, 7 perpendiculaires deux à deux.

Sur la face 10 du support 1 d'épaisseur 12 sont gravés une pluralité de motifs diffusants linéaires, constitués de rainures 3 dont l'espacement d1, d2, d3, d4 varie régulièrement le long d'une perpendiculaire aux tranches 4 et 5.

Du fait que cet espacement varie selon une progression géométrique, les rapports de deux espacements successifs dl/d2, d2/d3, d3/d4... sont égaux à la valeur de la raison de la progression géométrique qui est voisine de 1 mais différente de 1.

Dans le mode de réalisation illustré figure 2, les rainures 3 ont un profil sensiblement demi-circulaire, de sorte que la profondeur 32 des rainures est sensiblement égale à la moitié de la largeur 31 de ces rainures.

A titre d'exemple, les motifs 3 parallèles entre eux et parallèles aux tranches ou bords opposés 4 et 5, régulièrement espacés, ont été gravés sur un support 1 en polycarbonate d'épaisseur 12 voisine de 1 millimètre, de largeur 8 voisine de 400 millimètres et de longueur gravée 9 voisine de 800 millimètres ; le plus grand espacement (dl, figure 2) étant de 1,5 millimètre, on a tracé 1600 traits, dont l'espacement varie selon une progression géométrique (de raison 0,999 en partant du plus grand espacement, c'est-à-dire de raison 1,001 en partant du plus petit espacement).

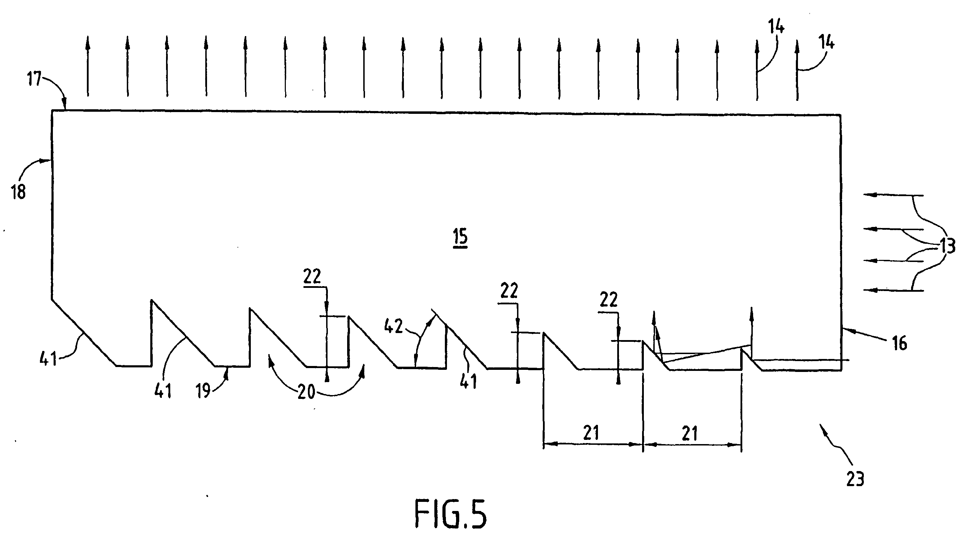

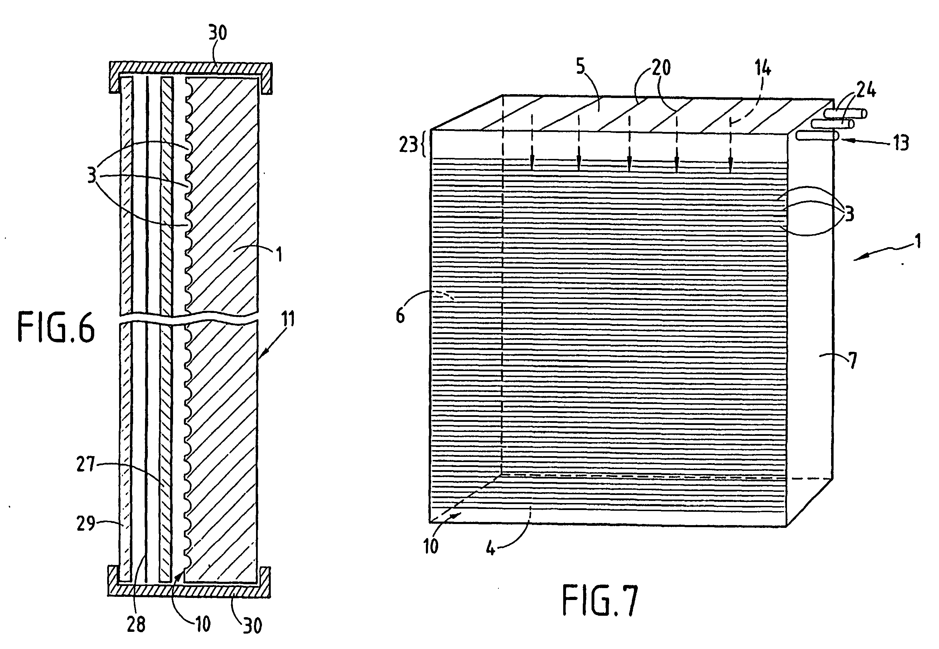

Comme illustré aux figures 1, 5 et 7 en particulier, le support 1 peut comporter une zone 23 servant à répartir un flux lumineux incident 13 arrivant sensiblement parallèlement à la tranche 5 et/ou aux motifs 3, pour la formation d'un faisceau lumineux dévié 14, sensiblement homogène tout le long de la tranche 5, et perpendiculaire à celle-ci ; le dispositif 23 de déviation peut être intégré au support 1 ou séparé, comme illustré figure 5 où il se présente sous la forme d'un parallélépipède rectangle 15 mince d'épaisseur de préférence voisine de l'épaisseur du panneau 1 auquel il est destiné, et délimité par quatre faces ou bords 16, 17, 18 et 19 ; la lumière incidente 13 (qui est délivrée - figure 7 - par des extrémités 24 de fibre optique) pénètre par la face 16 et ressort par la face 17 sous forme d'un faisceau homogène 14 réparti sur toute la longueur de cette face 17 qui est accolée à la tranche 4 ou 5 du support 1 auquel elle est destinée ; la face 19 opposée à la face 17 est munie d'une pluralité de rainures 20 de profil triangulaire, espacées d'un pas 21, par exemple variable, dotées d'une profondeur 22 par exemple constante ; cependant, selon le mode de réalisation préférentiel représenté figure 5, le pas 21 d'espacement des encoches 20 est constant, et la profondeur 22 des encoches ou rainures est régulièrement variable (croissante lorsqu'on s'éloigne de la zone 16 d'injection de lumière) le long du bord (ou tranche) 19, afin de favoriser la production d'un faisceau lumineux 14 d'intensité sensiblement constante le long du bord (ou tranche) 17 ; de préférence les faces 18 et 19 ainsi que les rainures 20 sont munies sur leur face externe d'un traitement ou moyen réfléchissant pour favoriser la déviation du faisceau incident 13 pour la formation du faisceau 14 réfléchi ; chaque rainure 20 comporte une face sensiblement plane 41, qui est inclinée d'un angle 42 - qui est sensiblement égal à 45° - par rapport à la tranche 19 du déviateur 23, pour jouer un rôle de miroir diffusant pour la formation du flux sortant 14 par réflexion du flux entrant 13.

Ce dispositif 23 déviateur peut être constitué d'un morceau 15 d'un matériau identique à celui constituant le panneau 1, par exemple de largeur de l'ordre de 45 millimètres, et muni d'encoches dont la profondeur 22 est de l'ordre de 8 millimètres et espacées d'une distance 21 de l'ordre de 25 millimètres ; ceci permet dans un espace réduit, de dévier le faisceau 13 incident et permet d'éviter la formation, comme illustré figure 3, d'une structure constituée par les extrémités des tronçons 26 de fibres optiques partant de la tranche 4 du support 1, qui est encombrante et doit être protégée.

Alors que dans les modes de réalisation illustrés figures 1, 4 et 7 en particulier, les motifs 3 s'étendent continûment sur toute la longueur du support 1, dans le mode de réalisation de la figure 3, les motifs linéaires 3 sont des segments 3a, 3b de rainures ; les rainures sont parallèles à la tranche 4 par laquelle est injectée la lumière ; la position et la longueur de ces segments est telle que les extrémités 32 des segments forment le dessin d'une lettre « X ».

Dans le mode de réalisation illustré figure 6, le support 1 muni des motifs 3 diffusants sur sa face 10, est logé dans un cadre 30 par exemple constitué de profilés de section transversale en forme de « U » ; contre (devant) la face 10 sont disposés plusieurs éléments minces recouvrant en partie au moins la face 10 : un écran diffusant homogène 27, un masque 28 tel qu'une feuille de papier ou d'adhésif portant des signes à afficher, et un panneau 29 de protection ; ces éléments sont maintenus accolés au support 1 par le cadre 30.

L'invention s'applique particulièrement à la réalisation d'enseignes ou caissons lumineux, de dalles ou panneaux lumineux pour le bâtiment, d'éclairage pour écrans d'ordinateurs.

## Revendications

1. Guide de lumière pour un dispositif d'éclairage, qui comporte une plaque (1) transparente en verre ou matière plastique, ayant deux faces principales opposées (10, 11) et une tranche (4), au moins une des faces principales comportant un réseau de motifs (3) diffusants linéaires **caractérisé en ce que** l'espacement des motifs (3) diffusants linéaires varie régulièrement le long d'un axe selon une progression géométrique dont la raison est située dans une plage allant de 0,99 à 1,01, et différente de 1.

2. Guide selon la revendication 1, dans lequel ladite raison est située dans une plage allant de 0,999 à 1,001, et différente de 1.

3. Guide selon l'une quelconque des revendications 1 ou 2, dans lequel le coefficient de transmission de la plaque dans le domaine des radiations visibles est au moins égal à 0,85, en particulier situé dans une plage allant de 0,85 à 0,95.

4. Guide selon l'une quelconque des revendications 1 à 3, dans lequel le nombre de motifs diffusants est compris entre 100 et 10 000 et de préférence compris entre 300 et 3 000.

5. Guide selon l'une quelconque des revendications 1 à 4, dans lequel les motifs sont formés à l'aide d'un faisceau laser, les motifs étant en forme de rainures rectilignes parallèles entre elles et à la tranche (4, 5) de la plaque, dont la largeur est située dans une plage allant de 10 à 100 microns, et dans lequel la distance minimale entre deux rainures est située dans une plage allant de 20 à 200 microns et dans lequel la distance maximale entre deux rainures est inférieure à 10 millimètres.

6. Dispositif, en particulier une enseigne ou un panneau lumineux, qui comporte :
- un guide selon l'une quelconque des revendications 1 à 5,
- une source (2) lumineuse,
- un faisceau de fibres optiques plastiques de transport de la lumière émise par la source vers une tranche de la plaque (1).

7. Dispositif selon la revendication 6, qui comporte une pluralité de tronçons (26) de fibres optiques plastiques formant un faisceau (25) acheminant la lumière de la source (2) à la tranche (4) de la plaque (1), qui comporte un organe (23) distributeur et déviateur de lumière le long de la tranche comportant des moyens (19, 20) réfléchissants, qui comporte des rainures (20) sur la tranche du distributeur, dont l'axe longitudinal est sensiblement perpendiculaire au plan de la plaque (1) et dont la profondeur (22) varie le long de la tranche et dans lequel le distributeur (23) est intégré à la plaque (1).

8. Dispositif, en particulier une enseigne ou un panneau lumineux, qui comporte un guide selon l'une quelconque des revendications 1 à 5, des diodes (2) luminescentes en regard de la tranche, et qui comporte un écran (27) diffusant.

9. Procédé de fabrication d'un guide de lumière pour dispositif lumineux comportant une plaque (1) mince en matière plastique transparente ou en verre, **caractérisé en ce que** l'on forme sur au moins une face principale (10, 11) de la plaque (1) un réseau de motifs (3) diffusants linéaires dont l'espacement varie régulièrement selon une progression géométrique dont la raison est située dans une plage allant de 0,99 à 1,01, et différente de 1, à l'aide d'un faisceau laser.

10. Procédé de fabrication selon la revendication 9 d'un guide selon l'une quelconque des revendications 1 à 5 dans lequel on forme sur la plaque (1) les motifs (3) diffusants linéaires à l'aide d'un laser de longueur d'onde de l'ordre de 10 microns, en déplaçant un organe de guidage d'un faisceau émis par une source laser, lequel organe de guidage est monté sur un dispositif de déplacement selon deux axes perpendiculaires, le dispositif de déplacement étant commandé par une unité électronique numérique.

## Claims

1. A light guide for a lighting device, which guide comprises a transparent plate (1) of glass or plastics material, having two opposite main faces (10, 11) and an edge (4), at least one of the main faces having a grating of linear diffusing motifs (3); the light guide being **characterised in that** the spacing of the linear diffusing motifs (3) varies regularly along an axis in geometric progression having a ratio lying in the range 0.99 to 1.01 and different from 1.

2. A guide according to claim 1, in which said ratio lies in the range 0.999 to 1.001 and different from 1.

3. A guide according to claim 1 or 2, having a plate with a transmission coefficient in the visible range of not less than 0.85, and in particular situated in the range 0.85 to 0.95.

4. A guide according to any one of claims 1 to 3, in which the number of diffusing motifs lies in the range 100 to 10,000, and preferably in the range 300 to 3000.

5. A guide according to any one of claims 1 to 4, in which the motifs are formed by means of a laser beam, the motifs being in the form of rectilinear grooves that are parallel to one another and to the edge (4, 5) of the plate, of a width lying in the range 10 µm to 100 µm, and in which the minimum distance between two grooves lies in the range 20 µm to 200 µm, and in which the maximum distance between two grooves is less than 10 mm.

6. A device, in particular a luminous panel or sign, which includes:
- a guide according to any one of claims 1 to 5;
- a light source (2); and
- a bundle of plastic optical fibres transporting the light emitted by the source to an edge of the plate (1).

7. A device according to claim 6, which includes a plurality of lengths (26) of plastic optical fibres forming a bundle (25) conveying light from the source (2) to the edge (4) of the plate (1), which plate has a light deflecting and distributing member (23) along the edge, which member has reflecting means (19, 20) comprising grooves (20) in the edge of the distributor, the longitudinal axis thereof being substantially perpendicular to the plane of the plate (1) and the depth (22) thereof varying along the edge, and in which the distributor (23) is integrated in the plate (1).

8. A device, in particular a luminous panel or sign, comprising a guide according to any one of claims 1 to 5; light-emitting diodes (2) facing the edge, and further comprising a diffusing screen (27).

9. A method of manufacturing a light guide for a luminous device that includes a thin plate (1) of glass or transparent plastics material, the method being **characterised in that** a grating of linear diffusing motifs (3) is formed on at least one main face (10, 11) of the plate (1) by means of a laser beam, said spacing thereof varying regularly along an axis in geometric progression with a ratio that lies in the range 0.99 to 1.01 and that is different from 1.

10. A method according to claim 9 of manufacturing a device according to any one of claims 1 to 5, in which the linear diffusing motifs (3) are formed on the plate (1) by means of a laser having a wavelength of about 10 µm, by displacing a member for guiding the beam emitted by a laser source, which guide member is mounted on a device for displacement along two perpendicular axes, the displacement device being controlled by a digital electronic unit.

## Patentansprüche

1. Lichtleiter für eine Beleuchtungsvorrichtung, mit einer transparenten Platte (1) aus Glas oder Kunststoff, die zwei gegenüberliegende Hauptseiten (10, 11) und eine Kante (4) aufweist, wobei wenigstens eine der Hauptseiten ein Netz aus linearen Streumotiven (3) umfaßt, **dadurch gekennzeichnet, daß** sich der Abstand der linearen Streumotive (3) entlang einer Achse entsprechend einer geometrischen Folge, deren Verhältnis in einem Bereich zwischen 0,99 und 1,01 liegt und nicht 1 beträgt, gleichmäßig ändert.

2. Leiter nach Anspruch 1, bei dem das genannte Verhältnis in einem Bereich zwischen 0,999 und 1,001 liegt und nicht 1 beträgt.

3. Leiter nach irgendeinem der Ansprüche 1 oder 2, bei dem der Durchlässigkeitsfaktor der Platte im Bereich der sichtbaren Strahlungen wenigstens gleich 0,85 ist, insbesondere in einem Bereich zwischen 0,85 und 0,95 liegt.

4. Leiter nach irgendeinem der Ansprüche 1 bis 3, bei dem die Anzahl der Streumotive zwischen 100 und 10.000 und vorzugsweise zwischen 300 und 3.000 liegt.

5. Leiter nach irgendeinem der Ansprüche 1 bis 4, bei dem die Motive mit Hilfe eines Laserstrahls gebildet werden, wobei die Motive in Form von geradlinigen Nuten vorliegen, die zueinander sowie zur Kante (4, 5) der Platte parallel verlaufen und deren Breite in einem Bereich zwischen 10 und 100 Mikron liegt, und bei dem der Mindestabstand zwischen zwei Nuten in einem Bereich zwischen 20 und 200 Mikron liegt und bei dem der maximale Abstand zwischen zwei Nuten weniger als 10 Millimeter beträgt.

6. Vorrichtung, insbesondere ein Leuchtschild oder eine Leuchttafel, die folgendes umfaßt:
- einen Leiter nach irgendeinem der Ansprüche 1 bis 5,
- eine Lichtquelle (2),
- einen Strang aus Kunststoff-Lichtleitfasern zum Transportieren des durch die Quelle ausgesandten Lichts zu einer Kante der Platte (1).

7. Vorrichtung nach Anspruch 6, die eine Vielzahl von Abschnitten (26) von Kunststoff-Lichtleitfasern umfaßt, die einen Strang (25) bilden, welcher das Licht von der Quelle (2) zur Kante (4) der Platte (1) transportiert, die ein Organ (23) zum Verteilen und Ablenken des Lichts entlang der Kante mit reflektierenden Mitteln (19, 20) umfaßt, das Nuten (20) an der Kante des Verteilers aufweist, deren Längsachse im wesentlichen senkrecht zur Ebene der Platte (1) verläuft und deren Tiefe (22) sich entlang der Kante ändert, und bei der der Verteiler (23) in die Platte (1) integriert ist.

8. Vorrichtung, insbesondere ein Leuchtschild oder eine Leuchttafel, die einen Leiter nach irgendeinem der Ansprüche 1 bis 5 und Leuchtdioden (2) gegenüber der Kante umfasst, und die einen Streuschirm (27) aufweist.

9. Verfahren zur Herstellung eines Lichtleiters für eine Leuchtvorrichtung mit einer dünnen Platte (1) aus transparentem Kunststoff oder Glas, **dadurch gekennzeichnet, daß** an wenigstens einer Hauptseite (10, 11) der Platte (1) mit Hilfe eines Laserstrahls ein Netz aus linearen Streumotiven (3) gebildet wird, deren Abstand sich entsprechend einer geometrischen Folge, deren Verhältnis in einem Bereich zwischen 0,99 und 1,01 liegt und nicht 1 beträgt, gleichmäßig ändert.

10. Verfahren nach Anspruch 9 zur Herstellung eines Leiters nach irgendeinem der Ansprüche 1 bis 5, bei dem die linearen Streumotive (3) auf der Platte (1) mit Hilfe eines Lasers mit einer Wellenlänge in der Größenordnung von 10 Mikron durch Bewegen eines Organs zum Führen eines durch eine Laserquelle ausgesandten Strahls gebildet werden, das genannte Führungsorgan an einer Vorrichtung zum Bewegen entlang zweier senkrechter Achsen angebracht ist, wobei die Bewegungsvorrichtung über eine digitale elektronische Einheit gesteuert wird.
